# EUROPEAN PATENT SPECIFICATION

(11) **EP 2 067 565 B1**
(45) Date of publication and mention of the grant of the patent: **21.06.2017**
(21) Application number: 07022920.8
(22) Date of filing: 27.11.2007
(51) Int. Cl.: B23K 1/00, B23K 35/362, B23K 35/38, F28D 1/03, B23K 101/14, B23K 35/36, B23K 1/008, B23K 1/20, B23K 35/02

(54) **Composition of brazing flux and method for manufacturing heat exchanger tubes using said composition**
Hartlötungsflussmittelzusammensetzung und Verfahren zur Herstellung von Wärmetauscherröhren mit besagter Zusammensetzung
Composition pour le brasage de flux et procédé pour la fabrication de tubes d'échangeur de chaleur utilisant ladite composition

(43) Date of publication of application: 10.06.2009
(73) Proprietor: Valeo Systèmes Thermiques, 78321 Le Mesnil St Denis Cedex (FR)
(72) Inventor: Akaike, Jun, 78321 Le Mesnil Saint Denis (FR); Hashikabe, Toru, 78321 Le Mesnil Saint Denis (FR)

(56) References cited:
- EP-A- 0 982 095
- WO-A-2008/025616
- US-B1- 6 656 290

## Description

### BACKGROUND OF THE INVENTION

The present invention relates to a method for manufacturing heat exchanger folding tubes used in automotive industry. In that context, the invention is particularly relevant to heating and air conditioning systems such as condensers, evaporators, heater cores, radiators, etc.

It is current trend within heat exchanger field to use folded tubes for manufacturing tube stacking cores like heater cores, radiators, evaporators, condensers, etc. Theses tubes are made from sheets or strips of a metal core, generally an aluminium alloy chosen in the 3xxx or 6xxx series. In a further step of manufacturing, the sheets of metal core are folded so as to form tubes like those known as B-shaped tubes, delimiting in the cross section of the tube two parallel channels for fluid flow. However, it should be noted that the invention is not limited to such B-shaped tubes.

Moreover, these tubes can be coated on one or two sides with a brazing material, also called "clad" material or "filler metal", made from an aluminium alloy of the 4xxx series. During the brazing step which allows for getting a product void of leaks, the clad material melts while the core material becomes viscous.

However, it has been proved that better brazing results could be achieved by including in the manufacturing process a fluxing stage before brazing, this fluxing stage consisting of depositing a layer of brazing flux. Actually, fluxing of parts turns out to be necessary in order to crack alumina and promote clad material motion during the brazing stage thanks to its wettability and capillarity. It is thus possible to get a good brazing seal capable of improving the mechanical strength of the tubes, namely under hydrostatic pressure.

As an example related to B-shaped folded tubes, it has been shown that the internal link of such tubes does not withstand pressures higher than 5 bars when merely brazed, while pressures up to 19 bars can be reached without damage when the area to be brazed, or an area next to, is coated with brazing flux prior to brazing.

Parts can be coated with brazing flux on their whole surface, or, in a preferred embodiment, only on the area to be brazed, or an area next to, so as to save brazing flux. This latter technology is known as "selective fluxing".

Brazing flux is generally made from a fluoride-based flux which is a mixture of potassium and aluminium fluorides (K₂AlF₅, KAlF₄ and K₃AlF₆) in various proportions. A fluoride-based flux is commercially available under the trade name "NOCOLOK".

The fluoride-based flux has the form of a powder which must be mixed to at least one other component in order to facilitate spreading on surfaces to be coated.

US patent n° 6,412,174 suggests to mix the fluoride-based flux with a synthetic resin, in particular a polybutene resin or an acrylic acid-based resin such as butyl acrylate.

However, a brazing flux including synthetic resin, as described in the above mentioned patent, shows at room temperature a very high kinetic viscosity, over 100 Pa.s, not compatible with certain types of pumps that are used in the fluxing process, like perilstatic pumps, resulting in too long machine cycle to start fluxing operation, leading to difficulties to spread the mixture according to this known solution, WO03089176 discloses flux-coated aluminum brazing sheet manufactured by combining brazing flux with polyvinyl butyral binder and organic solvent to form first mixture, shearing first mixture to form second mixture, combining second mixture with organic solvent to form brazing flux mixture, coating portion of surface of sheet with flux mixture, and drying flux mixture on sheet surface.

US6656290B discloses a method of hard soldering a plurality of parts made of aluminium applying a hard soldering paste and an aluminum fluxing agent made of aluminum fluorides and organic solvent - hexylene glycol - to at least one of said parts, and bring at least one of said paste into contact with another of said plurality of parts, so that said parts is in contact with both of said parts and brazing them.

### SUMMARY OF THE INVENTION

Accordingly, an object of the present invention is to provide a method for manufacturing a heat exchanger folded tube, comprising the steps of contacting a first tube portion against a support surface of a second tube portion at a contact zone, and brazing the first and second tube portions at said contact zone using a brazing material and a brazing flux, wherein said brazing flux comprises a mixture of a fluoride-based flux with a hexylene glycol-based solvent.

It has been shown by the applicant that the use of hexylene glycol (2-methyl-2,4-pentanediol) mixed with the fluoride-based flux could lead to kinetic viscosity as low as 1 Pa.s which is at least two orders of magnitude smaller than that obtained with a synthetic resin. The amount of said fluoride-based flux is 25 to 65 wt. % of said mixture. In particular, the amount of said fluoride-based flux is 38 wt. % of said mixture.

In addition to the above mentioned very low kinetic viscosity, the invention has many other advantages.

The fluoride-based flux consumption can be decreased thanks to lower concentrations.

Due to low viscosity, the machine and pump cycle to start fluxing can be greatly shortened, from 10 min to 15 s for instance.

Wettability of the brazing flux according to the invention is improved, thus making it possible to coat surfaces with 100% success.

The Production Rate of Return (PRR) of machines is increased since the brazing flux of the invention cannot dry owing to a very low volatility which does not need the tools, roll and flux cup for instance, of fluxing machines to be changed or cleaned after a short while stop. The time needed maintenance of equipments is decreased thanks to the use of the paste according to the invention.

No black carbon residues can be formed in the tubes after brazing in controlled atmosphere (CAB) contrary to some brazing flux comprising organic compounds used as thickener, binder, etc.

### BRIEF DESCRIPTION OF THE DRAWINGS

The invention will now be described in more detail, by way of example, with reference to the accompanying drawings in which :
Figure 1 is a cross section of a B-shaped tube for heat exchanger.
Figure 2 is an enlarged view of the tube shown in figure 1.

### DETAILED DESCRIPTION OF THE INVENTION

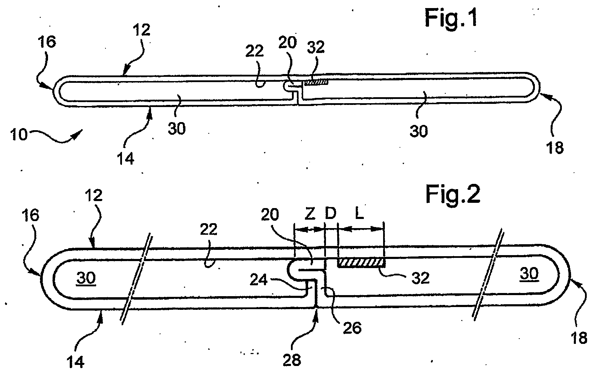

In figure 1 is represented a cross sectional view of a tube 10 for heat exchanger, after it has been folded and before it is brazed. Tube 10 is made from a metal sheet, preferably an aluminium-based metal, and shows two large parallel surfaces 12, 14 connected by two smaller U-shaped surfaces 16, 18.

Tube 10 comprises a first tube portion 20 made by rolling up a first edge area of said metal sheet, said first tube portion 20 being contacted against a support surface of a second tube portion 22. This second tube portion 22 is formed on the inner side of the large surface 12 and is oriented downwardly as can be seen on figure 1 and on the enlarged view of figure 2.

A second edge area 24 of the metal sheet is folded and put into contact with the starting section 26 of said first tube portion 20 so as to constitute altogether a separation wall 28 defining two parallel channels 30 for the fluid flowing through the tube. In a preferred embodiment, the two channels 30 have the same cross section.

It is worth noting that the first tube portion 20 applies against the second tube portion 22 in a contact zone Z which will later be a brazing zone.

Brazing of tube 10 is performed in a classical way with use of brazing material and a brazing flux.

The brazing material generally consists of a metal layer plated on the inner side of the metal sheet. As shown on figures 1 and 2, the brazing material is plated on the inner side of the sheet, i.e. the support surface of the second tube portion 22.

As previously mentioned, a brazing flux is used in addition to the brazing material in order to improve the brazing process. As shown in figures 1 and 2, the support surface of the second tube portion 22 is coated under controlled conditions with the brazing flux 32 at a distance D close to the contact zone Z and over a narrow band having a width L in accordance with the so-called "selective fluxing" technique.

The distance D and the width L may respectively range between 0 and 6 mm and 0,5 and 3 mm.

During the brazing step which is carried out in a CAB ("Controlled Atmosphere Brazing") furnace, the brazing flux 32 can move to the contact zone Z to fulfil its usual functions of brazing improvement.

So, after melting, the brazing flux can solve the alumina layer naturally formed on the surface of the parts to be put together. Moreover, the brazing flux is capable of wetting the portions of the tube to be brazed, thus enabling the brazing material to spread over the contacting surfaces. The brazing flux used in this process is a mixture of a fluoride-based flux with a hexylene glycol-based (2-methyl-2,4-pentanediol) solvent. The amount of said fluoride-based flux is 25 to 65 wt. % of said mixture.

In a preferred embodiment, the amount of said fluoride-based flux is 38 wt. % of said mixture.

This brazing flux is continuously deposited by means of a roll of a manufacturing device on a metal sheet unwounded from a reel. Then, the metal sheet is folded in the manufacturing device to give it the cross sectional profile desired for the tubes, and cut into sections constituting the individual tubes. The so obtained tubes are then put together with fins to form an assembly which is brazed in a single operation in a CAB furnace.

## Claims

1. A method for manufacturing a heat exchanger folded tube (10), comprising the steps of contacting a first tube portion (20) against a support surface of a second tube portion (22) at a contact zone (Z), and brazing the first (20) and second (22) tube portions at said contact zone (Z) using a brazing material and a brazing flux, wherein said brazing flux comprises a mixture of a fluoride-based flux with a hexylene glycol-based solvent (2-methyl-2.4-pentanediol), wherein the amount of the fluoride-based flux is 25 to 65 wt. % of said mixture, and wherein the brazing material consists of a metal layer plated on the inner side of the sheet on the support surface of the second tube portion (22).

2. The method as claimed in claim 1 wherein the amount of said fluoride-based flux is 38 wt. % of said mixture.

## Patentansprüche

1. Verfahren zum Herstellen eines gefalteten Wärmetauscherrohres (10), das die Schritte des Kontaktierens eines ersten Rohrteils (20) mit einer Stützfläche eines zweiten Rohrteils (22) in einer Kontaktzone (Z) und das Hartlöten des ersten (20) und zweiten (22) Rohrteils in der Kontaktzone (Z) unter Verwendung eines Hartlötmaterials und eines Hartlötflussmittels umfasst, wobei das Hartlötflussmittel eine Mischung eines fluoridbasierten Flussmittels mit einem hexylenglycol-basierten Lösungsmittel (2-Methyl-2.4-pentanediol) umfasst, wobei die Menge des fluoridbasierten Flussmittels 25 bis 65 Gew-% der Mischung beträgt, und wobei das Hartlötmaterial aus einer Metallschicht besteht, die auf die Innenseite des Blechs der Stützfläche des zweiten Rohrteils (22) aufmetallisiert ist.

2. Verfahren nach Anspruch 1, wobei die Menge des fluoridbasierten Flussmittels 38 Gew-% der Mischung beträgt.

## Revendications

1. Procédé de fabrication d'un tube replié (10) pour échangeur de chaleur, le procédé présentant les étapes qui consistent à
mettre en contact une première partie de tube (20) avec une surface de support d'une deuxième partie de tube (22) dans une zone de contact (Z) et à
braser la première partie (20) et la deuxième partie (22) de tube au niveau de ladite zone de contact (Z) en utilisant un matériau de brasage et un flux de brasage,
ledit flux de brasage comprenant un mélange d'un flux à base de fluor et d'un solvant (2-méthyl-2.4-pentanediol) à base d'hexylène glycol,
la quantité de flux à base de fluor étant de 25 à 35 % en poids dudit mélange,
le matériau de brasage étant constitué d'une couche de métal plaquée sur le côté intérieur de la tôle au niveau de la surface de support de la deuxième partie de tube (22).

2. Procédé selon la revendication 1, dans lequel la quantité dudit flux à base de fluor représente 38 % en poids dudit mélange.
